# EUROPEAN PATENT APPLICATION

(11) **EP 1 833 049 A1**
(43) Date of publication of application: **12.09.2007**
(21) Application number: 06111162.1
(22) Date of filing: 15.03.2006
(51) Int. Cl.: G11B 11/00

(54) **System for energy regeneration in a mobile device**

(30) Priority: 10.03.2006 US 372024
(71) Applicant: Research In Motion Limited, Waterloo, Ontario N2L 3W8 (CA)
(72) Inventor: Bayne, Ryan Mitchell, Waterloo Ontario N2K 1S5 (CA); Habicher, Michael, Waterloo, Ontario N2L 6B9 (CA); Purdy, Michael, Kitchener, Ontario N2E 4A4 (CA)
(74) Representative: Rickard, David John

(57) **Abstract**

A mobile device comprising: a hard disk (305,310); a motor (302) for spinning the hard disk; and a system for regenerating energy using the hard disk. The system (325) for regenerating energy using the hard disk may include: a switch (325) connected to the motor such that when the switch is in a first position, power flows from a power storage device to the motor to drive the motor and when the switch is in a second position, power flows from the motor based on kinetic energy of the spinning hard disk to the power storage device. The system for regenerating energy using the hard disk may be manufactured/combined with the hard disk and motor separately from the mobile device such that the system for regenerating energy may include the hard disk and motor.

## Description

This description relates to mobile devices having hard drives and, more particularly, to a system and method for energy regeneration in a mobile device using a hard drive.

In recent years, the popularity of mobile devices such as cell phones, personal digital assistants, music players, video and still cameras, and the like has been steadily increasing. The capabilities and functionality of these various devices has also been increasing and there has been an increasing demand on the ability of these devices to store data and to run for extended times between recharging or battery replacement. At the same time, there is also pressure to make these mobile devices increasingly smaller. These requirements have resulted in the use and further development of solid state forms of digital storage, such as flash memory and the like.

At the same time as these developments in solid state memory, advances in hard drive technology, such as the type used inside personal computers and lap top computers, have produced increasingly smaller hard drives. These advances in hard drives have resulted in some mobile device makers turning to hard drive technology to provide lower cost, efficient data storage. The advantages of hard drives over, for example, flash memory, include larger capacity, lower cost and generally faster erase speeds. When considering camcorders, hard drives also have advantages over tape storage, including the ability to randomly access data. One of the main drawbacks of the use of hard drives in mobile devices is the amount of power required to spin the storage platters/disks inside the hard drive itself to allow for reading from and writing to the hard drive. This power requirement is significantly higher than that required for reading from and writing to flash memory storage.

As such there is a need in the industry for a method of reducing the power consumption impact of hard drives in mobile devices.

In order to overcome at least some of the problems identified above, in an exemplary embodiment, there is provided a mobile device including: a hard disk; a motor for spinning the hard disk; and a system for regenerating energy using the hard disk.

In a particular case, the system for regenerating energy using the hard disk preferably includes: a switch connected to the motor; a power storage device connected to the switch such that when the switch is in a first position, power flows from the power storage device to the motor to drive the motor and when the switch is in a second position, power flows from the motor based on kinetic energy of the spinning hard disk to the power storage device; and a controller connected to the motor and the switch, for controlling the direction of power flow.

In this particular case, the mobile device may further include a regulator connected to the switch to receive and regulate power from the motor and send power to the power storage device.

In another exemplary embodiment, there is preferably provided a system for regenerating energy in a mobile device including: a hard drive unit having: a storage medium on which data can be stored; a read/write head for reading/writing data on the storage medium; and a motor for spinning the storage medium to allow the read/write head to read and write data to the storage medium; a switch connected to the hard drive unit; a power storage device connected to the switch such that when the switch is in a first position, power flows from the power storage device to the hard drive unit to drive the motor and when the switch is in a second position, power flows from the motor of the hard drive unit based on kinetic energy of the spinning storage medium to the power storage device; and a controller connected to the hard drive unit and the switch, for controlling the direction of power flow.

In this embodiment, the system may further include a regulator connected to the switch to receive and regulate power from the hard drive unit and send power to the power storage device.

The power storage device may be a battery, a capacitor, an ultra capacitor or the like.

In another exemplary embodiment, there is preferably provided a hard drive system including: a hard drive unit having: a storage medium on which data can be stored; a read/write head for reading/writing data on the storage medium; and a motor for spinning the storage medium to allow the read/write head to read and write data to the storage medium; and a switch connected to the hard drive unit such that when the switch is in a first position, the motor is in a first circuit configuration such that power can flow to the hard drive unit to drive the motor and when the switch is in a second position, the motor is in a second circuit configuration such that power can flow from the hard drive unit based on kinetic energy of the spinning storage medium.

In a particular case, the system may further include a regulator connected to the switch to receive and regulate power from the hard drive unit and send power to a power storage device.

In another particular case, the system may further include a controller that controls the motor and the switch for controlling the direction of power flow.

In yet another particular case, the system may further include a power storage device to store the power flowing from the hard drive unit based on kinetic energy of the spinning storage medium.

Similar to the above, the power storage device may be a battery, a capacitor, an ultra capacitor or the like.

### Brief Description of the Drawings

For a better understanding of the various embodiments described herein, and to show more clearly how they may be carried into effect, reference will now be made, by way of example only, to the accompanying drawings, which show at least one exemplary embodiment and in which:
FIG. 1 is a block diagram of an exemplary embodiment of a mobile device;
FIG. 2 is a block diagram of a communication subsystem component of the mobile device of FIG. 1;
FIG. 3 is a block diagram of a node of a wireless network in one exemplary implementation;
FIG. 4 is a block diagram of a system for energy regeneration with a hard drive;
FIG. 5 is block diagram showing the system of Fig. 4 in a motor drive state (Fig. 5A) and in a regeneration state (Fig. 5B);
FIG. 6 is a circuit diagram of a system for energy regeneration with a hard drive;
FIG. 7 is a schematic diagram of a simple motor arrangement; and
FIG. 8 is a timing diagram for the motor of FIG. 7.

### Description of Preferred Embodiments

The detailed description begins with a general description of an exemplary mobile device and an exemplary mobile environment and then proceeds to further describe exemplary embodiments of a system and method for energy regeneration using a mobile hard drive within this environment.

The mobile environment involves use of a mobile station. An exemplary mobile station is a two-way communication device with advanced data communication capabilities having the capability to communicate with other computer systems, and is also referred to herein generally as a mobile device. A mobile device may also include the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities). A mobile device may communicate with other devices either peer to peer or through a network of transceiver stations.

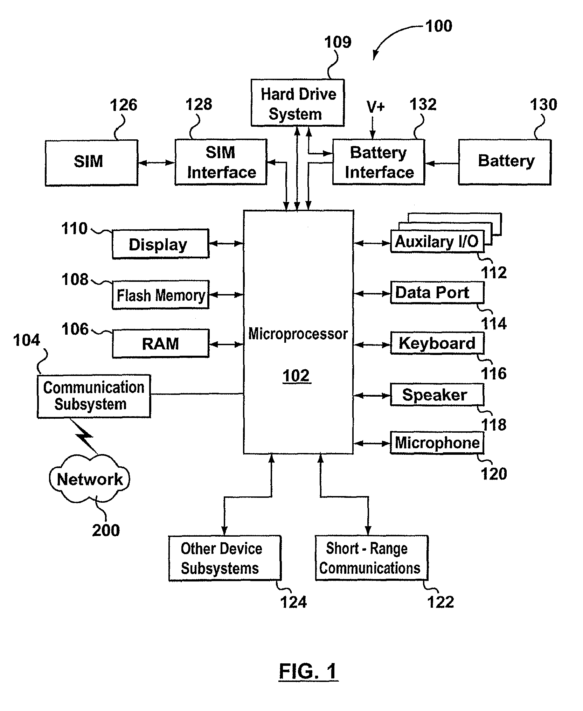

To aid the reader in understanding the structure of a mobile device and how it communicates with other devices, reference is made to FIGS. 1 through 3.

Referring first to FIG. 1, a block diagram of a mobile device in one example implementation is shown generally as 100. Mobile device 100 comprises a number of components, the controlling component being microprocessor 102. Microprocessor 102 controls the overall operation of mobile device 100. Communication functions, including data and voice communications, are performed through communication subsystem 104. Communication subsystem 104 receives messages from and sends messages to a wireless network 200. In this example implementation of mobile device 100, communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the invention is intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one exemplary implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some older examples of data-centric networks include the Mobitex^{™} Radio Network and the DataTAC^{™} Radio Network. Examples of older voice-centric data networks include Personal Communication Systems (PCS) networks like GSM and Time Division Multiple Access (TDMA) systems. Other networks include iDen and the 802.11 family of networks based on standards set by IEEE.

Microprocessor 102 also interacts with additional subsystems such as a Random Access Memory (RAM) 106, flash memory 108, hard drive 109, display 110, auxiliary input/output (I/O) subsystem 112, data port 114, keyboard 116, speaker 118, microphone 120, short-range communications 122 and other devices 124.

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, and device-resident functions such as a calculator or task list.

Operating system software used by microprocessor 102 is typically stored in a persistent store such as flash memory 108, which may alternatively be a read-only memory (ROM) or similar storage element (not shown). Application software may also be stored in flash memory 108. Alternatively, or additionally, operating system software and application software, or portions thereof, as well as data may be stored on hard drive 109. Those skilled in the art will appreciate that the operating system software, specific device application software, or parts thereof, and data may be temporarily loaded into a volatile store such as RAM 106.

Mobile device 100 may send and receive communication signals over network 200 after required network registration or activation procedures have been completed. Network access is associated with a subscriber or user of a mobile device 100. To identify a subscriber, mobile device 100 may require a Subscriber Identity Module or "SIM" card 126 to be inserted in a SIM interface 128 in order to communicate with a network. SIM 126 is one type of a conventional "smart card" used to identify a subscriber of mobile device 100 and to personalize the mobile device 100, among other things. Without SIM 126, mobile device 100 is not fully operational for communication with network 200. By inserting SIM 126 into SIM interface 128, a subscriber can access all subscribed services. Services could include: web browsing and messaging such as e-mail, voice mail, Short Message Service (SMS), and Multimedia Messaging Services (MMS). More advanced services may include: point of sale, field service and sales force automation. SIM 126 includes a processor and memory for storing information. Once SIM 126 is inserted in SIM interface 128, it is coupled to microprocessor 102. In order to identify the subscriber, SIM 126 contains some user parameters such as an International Mobile Subscriber Identity (IMSI). An advantage of using SIM 126 is that a subscriber is not necessarily bound by any single physical mobile device. SIM 126 may store additional subscriber information for a mobile device as well, including datebook (or calendar) information and recent call information.

Mobile device 100 is a battery-powered device and includes a battery interface 132 for receiving one or more batteries 130. Generally, rechargeable batteries are preferred. Battery interface 132 is coupled to a regulator (not shown), which assists battery 130 in providing power V+ to mobile device 100. Although current technology makes use of a battery, future technologies such as micro fuel cells may provide the power to mobile device 100.

Microprocessor 102, in addition to its operating system functions, enables execution of software applications on mobile device 100. A set of applications that control basic device operations, including data and voice communication applications, will normally be installed on mobile device 100 during its manufacture. Another application that may be loaded onto mobile device 100 would be a personal information manager (PIM). A PIM has functionality to organize and manage data items of interest to a subscriber, such as, but not limited to, e-mail, calendar events, voice mails, appointments, and task items. A PIM application has the ability to send and receive data items via wireless network 200. PIM data items may be seamlessly integrated, synchronized, and updated via wireless network 200 with the mobile device subscriber's corresponding data items stored and/or associated with a host computer system. This functionality creates a mirrored host computer on mobile device 100 with respect to such items. This can be particularly advantageous where the host computer system is the mobile device subscriber's office computer system.

Additional applications may also be loaded onto mobile device 100 through network 200, auxiliary I/O subsystem 112, data port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Data port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

The data port 114 can be any suitable port that enables data communication between the mobile device 100 and another computing device. The data port 114 may be, for example, a serial or parallel port. In some instances, the data port 114 can be a USB port that includes data lines as well as a power supply line that can provide a charging current to charge the battery 130.

Short-range communications subsystem 122 provides for communication between mobile device 100 and different systems or devices, without the use of network 200. For example, subsystem 122 may include an infrared device and associated circuits and components for short-range communication. Examples of short range communication would include standards developed by the Infrared Data Association (IrDA), Bluetooth, and the 802.11 family of standards developed by IEEE.

In use, a received signal such as a text message, an e-mail message, or web page download will be processed by communication subsystem 104 and input to microprocessor 102. Microprocessor 102 will then process the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112. Auxiliary subsystem 112 may include devices such as: a touch screen, mouse, track ball, infrared fingerprint detector, or a roller wheel with dynamic button pressing capability. Keyboard 116 is an alphanumeric keyboard and/or telephone-type keypad. A composed item may be transmitted over network 200 through communication subsystem 104.

For voice communications, the overall operation of mobile device 100 is substantially similar, except that the received signals would be output to speaker 118, and signals for transmission would be generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

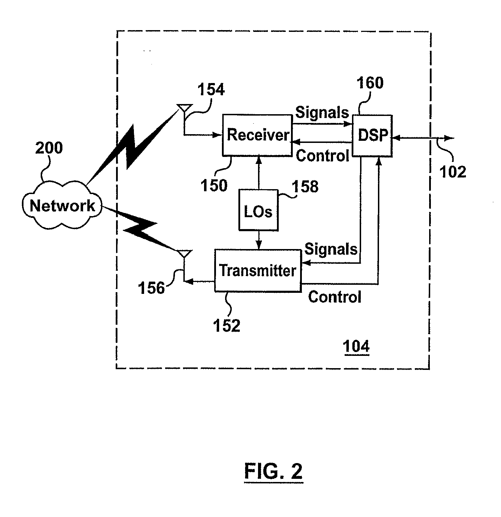

Referring now to FIG. 2, a block diagram of the communication subsystem component 104 of FIG. 1 is shown. Communication subsystem 104 comprises a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 is dependent upon the network 200 in which mobile device 100 is intended to operate, thus it should be understood that the design illustrated in FIG. 2 serves only as one example. Signals received by antenna 154 through network 200 are input to receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is a limited resource that must be conserved, typically due to limits in overall bandwidth and limited battery power of mobile device 100.

When mobile device 100 is fully operational, transmitter 152 is typically keyed or turned on only when it is sending to network 200 and is otherwise turned off to conserve resources. Similarly, receiver 150 is periodically turned off to conserve power until it is needed to receive signals or information (if at all) during designated time periods.

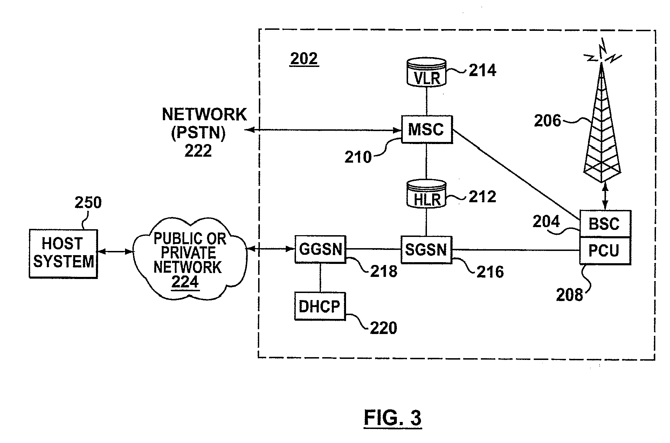

Referring now to FIG. 3, a block diagram of a node of a wireless network is shown as 202. In practice, network 200 comprises one or more nodes 202. Mobile device 100 communicates with a node 202 within wireless network 200. In the example implementation of FIG. 3, node 202 is configured in accordance with General Packet Radio Service (GPRS) and Global Systems for Mobile (GSM) technologies. Node 202 includes a base station controller (BSC) 204 with an associated tower station 206, a Packet Control Unit (PCU) 208 added for GPRS support in GSM, a Mobile Switching Center (MSC) 210, a Home Location Registry (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through network 200.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 also contains a Packet Control Unit (PCU) 208 that connects to SGSN 216 to control segmentation, radio channel allocation and to satisfy packet switched requirements. To track mobile device location and availability for both circuit switched and packet switched management, HLR 212 is shared between MSC 210 and SGSN 216. Access to VLR 214 is controlled by MSC 210.

Station 206 is a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in HLR 212. HLR 212 also contains location information for each registered mobile device and can be queried to determine the current location of a mobile device. MSC 210 is responsible for a group of location areas and stores the data of the mobile devices currently in its area of responsibility in VLR 214. Further VLR 214 also contains information on mobile devices that are visiting other networks. The information in VLR 214 includes part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times and at the same time requiring less use of computing resources.

SGSN 216 and GGSN 218 are elements added for GPRS support; namely packet switched data support, within GSM. SGSN 216 and MSC 210 have similar responsibilities within wireless network 200 by keeping track of the location of each mobile device 100. SGSN 216 also performs security functions and access control for data traffic on network 200. GGSN 218 provides internetworking connections with external packet switched networks and connects to one or more SGSN's 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218. There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, network 200 will run an idle timer for each PDP Context to determine if there is a lack of activity. When a mobile device 100 is not using its PDP Context, the PDP Context can be deallocated and the IP address returned to the IP address pool managed by DHCP server 220.

Having described an exemplary mobile device 100 and mobile environment, the following describes embodiments of a system for energy regeneration with a hard drive in a mobile device.

It is well known that electric motors generally have the capability to convert electrical energy into mechanical energy (i.e. electrical energy causes the motor shaft to turn) and also have the capability to convert mechanical energy back into electrical energy (i.e. act as a generator in which the turning of the motor shaft is converted into electricity).

When acting as a generator (converting mechanical energy to electrical energy), an external kinetic force provides torque to the motor shaft. The external kinetic force may be, for example, an applied external force, such as wind turning a windmill, or may be a force due to the inertia of a rotating element (such as a wheel of a car that is already in motion) connected directly or indirectly to the shaft of the motor. Based on the movement of the shaft, the magnets on the shaft of the motor (called the rotor-the moving part of the motor) move past electric coils on the stator (the stationary part of the motor) and thus produce a flow of electricity in the stator coils. Typically, this electricity is fed from the stator coils to a battery for storage. In the example of energy generated from the inertia of a rotating object, the energy that was expended to start and keep the shaft of the motor turning to produce the rotation initially can be reclaimed or regenerated from the kinetic energy of the turning shaft as it slows. This is where the terms "regeneration" or "reclaiming energy" arise. Energy regeneration has been applied to trains and more recently to automobiles in the format of regenerative braking, in which energy regeneration is used to slow the train or automobile. In an automobile or train, the motor is generally also slowed by conventional friction braking as well as by the regenerative process of transfer of energy from the shaft to the coils. Although regenerative braking has been used on larger scale systems such as those in trains and automobiles, these concepts have not been applied at a smaller scale, perhaps because of cost and space considerations as well as the relatively small amount of energy regeneration available compared to that available in larger systems such as automobiles and trains.

Turning to a hard disk unit in a mobile device, in a typical system, energy is required to be supplied to a motor in the hard disk unit to cause a hard disk (sometimes referred to as "disk") to spin up to operating speed and to keep the disk at the operating speed when in use. Conversely, when the hard disk unit is no longer needed the motor is turned off and the disk is allowed to slowly spin down or a friction braking force is applied until the disk stops. Frictional braking may be used in cases where it is necessary to cause the disk to spin down faster. Unfortunately, as the disk is allowed to spin down or is subject to braking, the kinetic energy of the disk is dissipated as heat due to the friction of an intentional braking process or due to bearing friction.

In exemplary embodiments, the kinetic energy of a spinning disk in a hard drive unit is converted and used to regenerate energy that can be fed back into, for example, a rechargeable battery in the mobile device 100.

The use of energy regeneration to recapture the kinetic energy of the spinning disk results in extended battery life for the mobile device 100 and allows extended functionality for the mobile device 100.

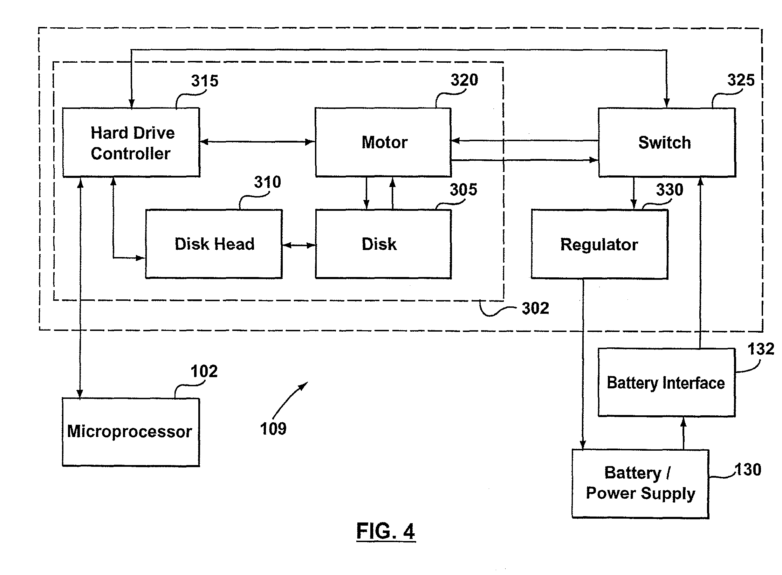

FIG. 4 shows a hard drive system 109 for energy regeneration using a hard drive unit 302 in a mobile device 100 according to an exemplary embodiment. Embodiments of the hard drive system 109 may sometimes be referred to as a system for regenerating energy in a mobile device.

The hard drive system 109 includes a hard drive unit 302, which includes a disk 305 (sometimes referred to as a "storage medium") and a disk head 310 (sometimes referred to as a "read/write head") for reading and writing to the disk 305. Both the disk 305 and the disk head 310 are well known in the art. In particular, the disk 305 may be any data storage medium that spins during operation. It will also be understood by one of skill in the art that the hard drive system 109 may include a plurality of disks 305 and of disk heads 310 but the following description will refer to one disk 305 and disk head 315 for simplicity. In this embodiment, the disk 305 is a conventional data storage medium such as those used in laptop computers (not shown) or the like. One of skill in the art will also appreciate that the disk head 310 is not strictly required with regard to the regeneration of energy but is a standard component of disk drive units.

The hard drive unit 302 also includes a motor 320. The motor 320 is used to spin the disk 305 so that the disk head 310 can read and write data onto the disk 305 as is well known in the art. The hard drive unit 302 also includes a hard drive controller 315. The hard drive controller 315 controls the operation of the motor 320 to cause the disk 305 to spin at an appropriate speed and also controls the disk head 310 to read, write (and erase) data based on information received from, for example, the microprocessor 102 of mobile device 100. While in this embodiment the hard drive unit 302 includes the hard drive controller 315, it will be understood that there may be embodiments in which the function of hard drive control may be performed separate from the hard drive unit 302 or hard drive system 109, for example, by the main processor 102 or another processor (not shown) within the mobile device 100. It will also be understood that the hard drive controller 315 may include one or more buffers for caching information to be written to or being read from the disk 305.

In this embodiment, the hard drive controller 315 is designed such that it can control the motor 320 to operate in two configurations. In a first configuration, the motor 320 is driven as a conventional motor in which electrical energy is converted to mechanical rotational energy, which is transmitted to the disk 305 to spin the disk 305. In a second configuration, the motor 320 acts as a generator in which the inertia of the spinning disk 305 spins the motor 320 and the kinetic energy of spinning is converted into electrical energy through the motor 320.

The hard drive system 109 is further provided with a switch 325, which, in this embodiment, is controlled by the hard drive controller 315 to switch between configurations and allow energy to flow to the motor 320 in the first configuration and energy to flow from the motor 320 in the second configuration.

The hard drive system 109 is further provided with a regulator 330 between the switch 325 and the battery/power supply 130 of the mobile device 100 to regulate the voltage/current that is being fed from the motor 320 when acting as a generator in the second configuration. In this embodiment, the energy flows from the regulator 330 to the battery/power supply 130 of the mobile device 100. Alternatively, the energy feed from the motor 320, acting as a generator in the second configuration, may be stored in other power storage devices or elements such as capacitors or ultracapacitors (not shown) or the like, which may be an element of the hard drive system 109 or may be an element of the mobile device 100, such as battery 130.

As shown in FIG. 4, for incoming energy, the hard drive system 109 is connected to the battery interface 132 of the mobile device 100 such that power flows from the battery/power supply 130 through the battery interface 132 to the switch 325 and then to the motor 320. Although referred to as a battery interface 132, one of skill in the art will understand that the battery interface 132 can be any suitable interface configured to work with various power storage devices.

In alternative embodiments, the regulator 330 which, in FIG. 4, is shown as a part of the hard drive system 109 may be a part of the battery interface 132 of the mobile device 100 or may be designed to handle power flowing to or from a capacitor or ultracapacitor within the hard drive system 109.

The regeneration of energy from the spinning disk 305 on the mobile device 100 is intended to conserve battery power and, thus, provide the mobile device 100 with a longer usable time between battery charges.

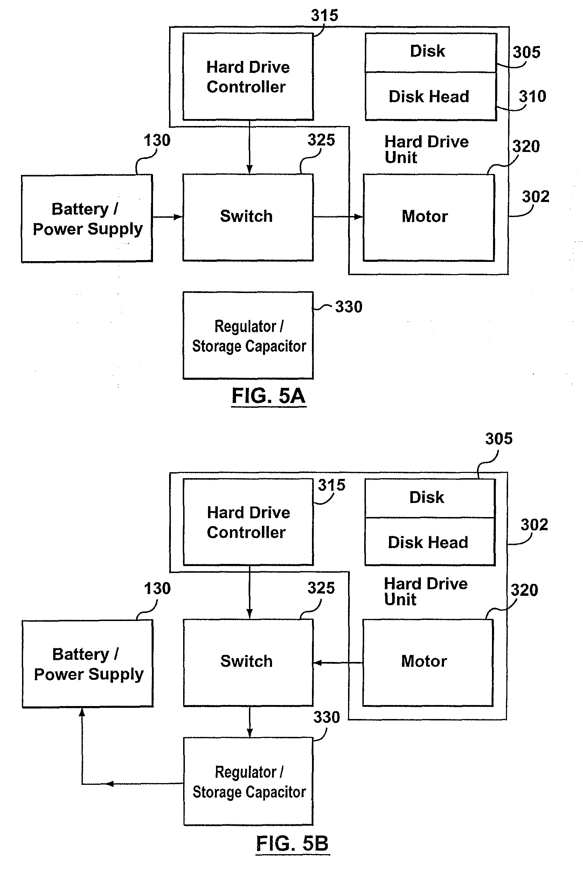

FIGS. 5A and 5B are schematic diagrams showing the operation of the hard drive system 109 in the first configuration (FIG. 5A) (as configured when driving the motor 320) and in the second configuration (FIG. 5B) (as configured during energy regeneration).

In FIG. 5A, the switch 325 is set by the hard drive controller 315 such that energy from the power supply 130 is transferred to the motor 320 of the hard drive system 109. The hard drive controller 315 then controls the motor 320 to begin spinning the disk (storage medium) 305 at an appropriate speed and, once the disk 305 is spinning, controls the disk head 310 to read, write or erase data from the disk 305, as required. This configuration will be maintained until an appropriate timing as determined by hard drive operation/caching principles as are known in the art. In particular, the spin-up/down cycles will generally be dependent on the software architecture, intended use of the mobile device 100, and other factors as will be understood by one of skill in the art. An efficient design generally minimizes the number of times the disk 305 is spun up. In particular, a caching mechanism may be used to buffer a number of read or write functions and then perform these actions together when the disk 305 is spinning.

Once it is determined by the hard drive controller 315 (or alternatively, the microprocessor 102 instructing the hard drive controller 315) that the disk 305 can be allowed to stop, the configuration is changed to that shown in FIG. 5B. In FIG. 5B, the hard drive controller 315 sets the switch 325 to the energy regeneration configuration. In this configuration, energy flows from the motor 320 and passes through the switch 325 to the regulator 330 and then passes back to the power supply 130.

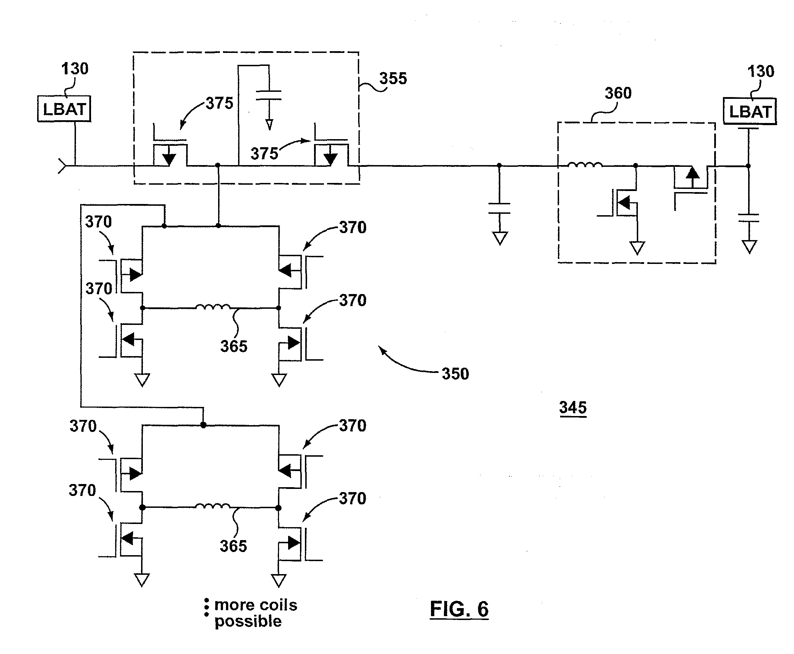

In FIG. 6, the hard drive system 109 is further illustrated by an example circuit 345 according to an exemplary embodiment. The circuit 345 is comprised of three general sections: the motor and commutator section 350 (referred to as the motor section 350); the switch section 355; and the regulator section 360, which generally correspond to related elements in FIG. 4.

The motor section 350 is a motor having a spindle (rotor) (not shown in FIG. 6) and windings 365 (stator) to provide the drive or the braking for the spindle. The motor section 350 includes switches 370 that activate or deactivate each of the windings 365 in synchronization with the spindle. These switches 370 turn on and off to allow current to flow through the windings 365 to provide a driving force or to regenerate energy depending on the setting of the switch section 355. It will be understood that the phase of the spindle should be detected with a magnetic sensor (not shown), such as a Hall-effect device or the like, in order to provide for proper switching and efficient commutation.

The switch section 355 includes a switch 375 (in this case, two switches 375) to redirect energy based on whether the motor section 350 is being driven or is acting as a generator.

The regulator section 360 regulates the energy that is being re-supplied to the battery 130 during regeneration. The regulator section 360 preferably includes a voltage boost circuit, a buck boost circuit, or other type of circuit that provides regulation of the voltage. In this particular example, the circuit illustrated is a voltage boost circuit. Various voltage regulation circuits are known to those of skill in the art.

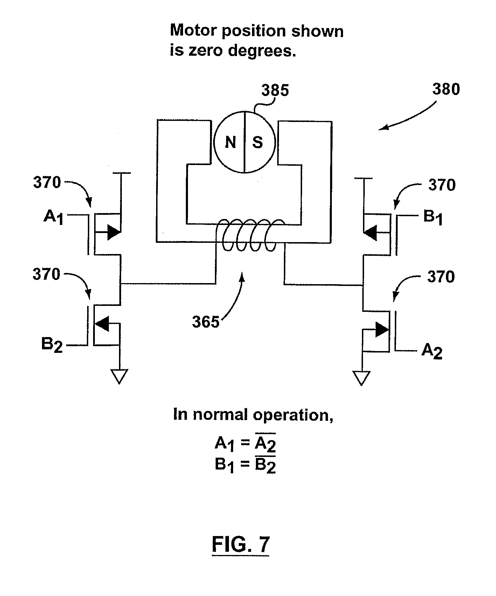

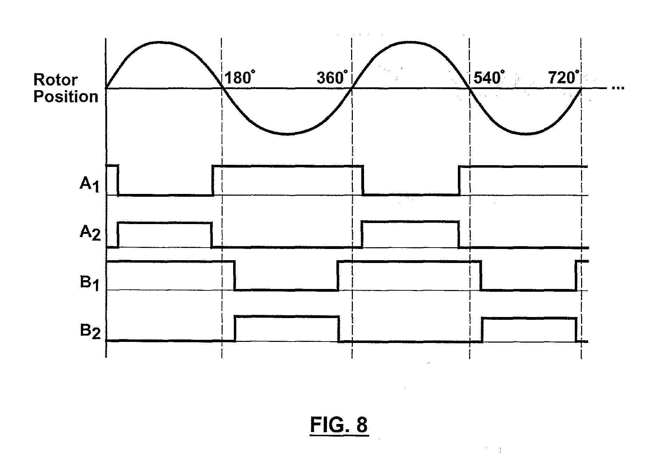

FIG. 7 is a schematic diagram of a simple motor configuration to illustrate an example timing cycle, as shown in FIG. 8. As shown in FIG. 7, a simple one-coil motor 380 includes a rotor 385 and a winding (stator) 365. The winding 365 is controlled by a group of switches 370 that, in drive configuration (first configuration), switch on or off at an appropriate timing to allow current to flow through each winding 365 to drive the rotor 385 to spin or, in regeneration configuration (second configuration), to regenerate energy from this spinning rotor 385. As shown in FIG. 8, the switches 370 are controlled in accordance with the position of the rotor 385 to drive the rotor 385 to spin or to slow down as will be understood by one of skill in the art.

As described above, the determination of the timing for a disk in a hard drive unit to spin up to speed and then spin down to allow for regeneration of energy is dependent on a number of factors including the software architecture, the nature of the mobile device involved, and the like.

The use of energy regeneration such as that described herein allows the system a greater range of freedom with regard to when or how often to cause the hard drive to spin up because a certain amount of energy can be recaptured on the spin down. Again, as indicated above, such a system may make use of caching to allow information to be written to or read from the hard drive in larger portions so that it is not necessary to access the hard drive as often as would otherwise have been the case. It would also be understood by one of skill in the art that, in some cases, a more standard style of faster braking may be more desirable in the situation where there is a sudden acceleration such as may be detected when the mobile device has been dropped or the like.

In alternative embodiments, the regenerated energy may be stored in energy storage devices other than a rechargeable battery, such as ultracapacitors or the like. This may allow more flexibility in the type of circuits available for energy storage. In a particular case, it may also be convenient to store regenerated energy in a capacitor or the like so that the regenerated energy can be re-supplied directly to the motor at the next start up of the disk for a faster start up of the motor.

It will be understood that in any of the embodiments described above, embodiments of the hard drive system 109 may be manufactured or supplied together with or separately from the mobile device 100.

The above description has focused on energy regeneration in mobile hard drives, however, it will be understood by one of skill in the art that similar consideration may apply to other storage media that spin such as CDs, DVDs or the like that are currently known or hereafter developed.

The invention has been described with regard to a number of embodiments. However, it will be understood by persons skilled in the art that other variants and modifications may be made without departing from the scope of the invention as defined in the claims appended hereto.

## Claims

1. A system for storing data and regenerating energy comprising:
a storage medium on which computer readable data can be stored;
a motor for spinning the storage medium
a means for regenerating energy from the spinning storage medium.

2. The system of claim 1, wherein the means comprises a switch.

3. The system of claim 2 wherein the switch is operable between at least two positions.

4. The system of claim 3 wherein the means further comprises a controller which controls the motor and the switch.

5. The system of claim 4, wherein the means further comprises an energy storage device for storing energy.

6. The system of claim 5 wherein in a first position of the switch the system is operable to transfer energy from the energy storage device to the motor to drive the motor.

7. The system of claim 5 wherein in a second position of the switch the system is operable to transfer energy from the spinning storage medium to the energy storage device and to store energy in the energy storage device.

8. The system of any one of claims 1 to 7, wherein the means further comprises a regulator connected to the switch to receive and regulate energy from the motor and send energy to the energy storage device.

9. The system of any one of claims 5 to 8, wherein the energy storage device is a battery.

10. The system of any one of claims 5 to 8, wherein the energy storage device is a capacitor.

11. The system of any one of claims 5 to 8, wherein the energy storage device is an ultra capacitor.

12. The system of any one of the previous claims wherein the system further comprises a read/write head for reading/writing data on the storage medium;

13. A method for storing data and regenerating energy comprising the steps:
providing a computer readable data storage medium for storing data;
providing an energy pathway for energy to spin the storage medium;
providing a means for regenerating energy from the spinning storage medium.

14. The method of claim 13 wherein the means comprises a switch which is operable between at least two positions.

15. The method of claim 14 wherein the means further includes a controller which controls the motor and the switch.

16. The method of claim 15 wherein the means further comprises an energy storage device for storing energy.

17. The method of claim 16 wherein the controller controls the switch and the motor such that, in a first position of the switch, energy is transferred from the energy storage device to the motor to drive the motor.

18. The method of claim 16 wherein the controller controls the switch and the motor such that, in a second position of the switch, energy from the spinning storage medium is transferred to the energy storage device and stored in the energy storage device.

19. The method of any one of claims 13 to 18, wherein the means further comprises a regulator to receive and regulate energy from the motor and send energy to the energy storage device.

20. The method of any one of claims 16 to 19 wherein the energy storage device is a battery.

21. The method of any one of claims 16 to 19, wherein the energy storage device is a capacitor.

22. The method of any one of claims 16 to 19, wherein the energy storage device is an ultra capacitor.

23. The method of any one of the claims 13 to 22 wherein the method further comprises the step of providing a read/write head for reading/writing data on the storage medium.

## Amended claims

### Amended claims in accordance with Rule 86(2) EPC.

**1.** A system (109) for storing data and regenerating energy on a mobile device (100), the system comprising:
a storage medium (305) on which computer readable data can be stored;
a motor (320) for spinning the storage medium;
a caching means for caching data, said data comprising data to be written to or read from the storage medium when the storage medium is spinning; and
a means (315, 320, 325, 330, 130) for regenerating energy from the spinning storage medium (305).

**2.** The system (109) of claim 1, wherein the means for regenerating energy comprises a switch (325).

**3.** The system (109) of claim 2 wherein the switch (325) is operable between at least two positions.

**4.** The system (109) of claim 3 wherein the means for regenerating energy further comprises a controller (315) for controlling the motor (320) and the switch (325).

**5.** The system (109) of claim 4, wherein the means for regenerating energy further comprises an energy storage device (130) for storing energy.

**6.** The system (109) of claim 5 wherein in a first position of the switch (325) the system is operable to transfer energy from the energy storage device (130) to the motor (320) to drive the motor.

**7.** The system (109) of claim 5 wherein in a second position of the switch (325) the system is operable to transfer energy from the spinning storage medium (305) to the energy storage device (130) and to store energy in the energy storage device.

**8.** The system (109) of any one of claims 1 to 7, wherein the means for regenerating energy further comprises a regulator (330) connected to the switch (325) to receive and regulate energy from the motor (320) and to send energy to the energy storage device (130).

**9.** The system (109) of any one of claims 5 to 8, wherein the energy storage device is any a battery (130).

**10.** The system (109) of any one of claims 5 to 8, wherein the energy storage device is a capacitor.

**11.** The system (109) of any one of claims 5 to 8, wherein the energy storage device is an ultra capacitor.

**12.** The system (109) of any one of the previous claims wherein the caching means comprises a cache memory and a controller configured to cache a predetermined amount of data in the cache memory prior to causing the storage medium (305) to begin spinning.

**13.** A method for storing data and regenerating energy on a mobile device (100), the method comprising the steps:
providing a computer readable data storage medium (305) for storing data;
providing a caching means for caching data, said data comprising data to be written to or read from the storage medium when the storage medium is spinning;
providing an energy pathway for energy to spin the storage medium (305); and
providing a means (315, 320, 325, 330, 130) for regenerating energy from the spinning storage medium (305).

**14.** The method of claim 13 wherein the means for regenerating energy is provided with a switch (325) which is operable between at least two positions.

**15.** The method of claim 14 wherein the means for regenerating energy is provided with a controller (315) which controls the motor (320) and the switch (325).

**16.** The method of claim 15 wherein the means for regenerating energy is provided with an energy storage device (130) for storing energy.

**17.** The method of claim 16 wherein the controller (315) controls the switch (325) and the motor (320) such that, in a first position of the switch, energy is transferred from the energy storage device (130) to the motor (320) to drive the motor.

**18.** The method of claim 16 wherein the controller (315) controls the switch (325) and the motor (320) such that, in a second position of the switch, energy from the spinning storage medium (305) is transferred to the energy storage device (130) and stored in the energy storage device.

**19.** The method of any one of claims 13 to 18, wherein the means for regenerating energy is provided with a regulator (330) to receive and regulate energy from the motor (320) and send energy to the energy storage device (305).

**20.** The method of any one of claims 16 to 19 wherein the energy storage device is provided as a battery (130).

**21.** The method of any one of claims 16 to 19, wherein the energy storage device is provided as a capacitor.

**22.** The method of any one of claims 16 to 19, wherein the energy storage device is provided as an ultra capacitor.

**23.** The method of any one of the claims 13 to 22 wherein the step of providing a caching system further comprises providing a cache memory and a controller configured to cache a predetermined amount of data in the cache memory prior to causing the storage medium to begin spinning.

**24.** A mobile device (100) having the system (109) for storing data and regenerating energy of any one of claims 1 to 12.
